# EUROPÄISCHE PATENTSCHRIFT

(11) **EP 2 249 062 B1**
(45) Veröffentlichungstag und Bekanntmachung des Hinweises auf die Patenterteilung: **24.08.2011**
(21) Anmeldenummer: 10156285.8
(22) Anmeldetag: 12.03.2010
(51) Int. Cl.: F16H 37/04, F16H 61/04

(54) **Verfahren zum Betreiben eines Antriebsstrangs**
Method for operating a drive train
Procédé destiné au fonctionnement d'une chaîne cinématique

(30) Priorität: 08.05.2009 DE 102009002921
(43) Veröffentlichungstag der Anmeldung: 10.11.2010
(73) Patentinhaber: ZF Friedrichshafen AG, 88038 Friedrichshafen (DE)
(72) Erfinder: Breuer, Jochen, 88069, Tettnang (DE); Miller, Martin, 88090, Immenstaad (DE); Steinborn, Mario, 88046, Friedrichshafen (DE); Hafen, Thomas, 88682, Salem (DE); Bader, Josef, 88045, Friedrichshafen (DE); Graf, Andreas, 78333, Stockach-Wahlwies (DE)

(56) Entgegenhaltungen:
- EP-A2- 1 895 201
- EP-A2- 2 037 160

## Beschreibung

Die Erfindung betrifft ein Verfahren zum Betreiben eines Antriebsstrangs, der zumindest ein Antriebsaggregat, ein Getriebe und einen Abtrieb aufweist.

Gruppengetriebe mit einem mehrstufigen Hauptgetriebe und einer diesem vor- oder nachgeschalteten Bereichsgruppe sowie mit einer dem Hauptgetriebe vor- oder nachgeschalteten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

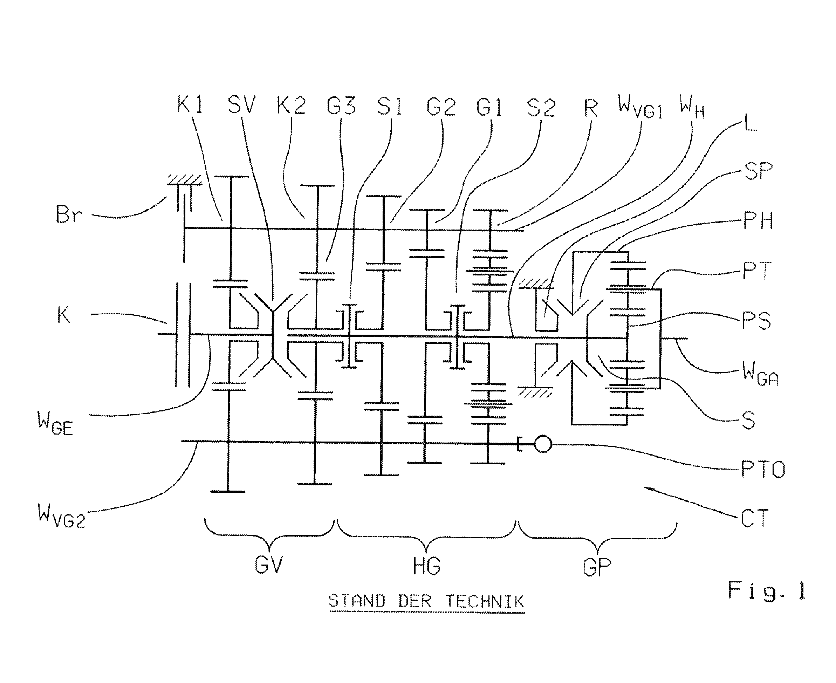

Fig. 1 zeigt ein Schema eines von der Anmelderin stammenden Gruppengetriebes der sogenannten AS-Tronic-Familie. Das in Fig. 1 dargestellte Gruppengetriebe CT umfasst ein Hauptgetriebe HG, eine dem Hauptgetriebe HG antriebstechnisch vorgeschaltete Vorschaltgruppe bzw. Splitgruppe GV sowie eine dem Hauptgetriebe HG nachgeschaltete Bereichsgruppe GP. Das Hauptgetriebe HG des Gruppengetriebes CT der Fig. 1 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit einer steuerbaren Getriebebremse Br versehen ist.

Das Hauptgetriebe HG ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet.

Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils als Klauenkupplungen ausgebildet und in einem gemeinsamen Schaltpaket S1 bzw. S2 zusammengefasst. Das Hauptgetriebe HG ist unsynchronisiert schaltbar.

Die Vorschaltgruppe bzw. Splitgruppe GV des Gruppengetriebes CT der Fig. 1 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstante des Hauptgetriebes HG bilden. Durch eine geringere Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, als Verbrennungsmotor ausgebildeten Antriebsaggregat in Verbindung steht.

Das Losrad der zweiten Übersetzungsstufe K2 ist drehbar auf der Hauptwelle W_{H} gelagert. Die Festräder beider Übersetzungsstufen K1, K2 der Vorschaltgruppe GV sind jeweils drehfest mit den eingangsseitig verlängerten Vorgelegewellen W_{VG1} und W_{VG2} des Hauptgetriebes angeordnet. Die synchronisierten und als Klauenkupplungen ausgebildeten Schaltkupplungen der Vorschaltgruppe GV sind in einem gemeinsamen Schaltpaket SV zusammengefasst.

Die dem Hauptgetriebe HG nachgeordnete Bereichsgruppe GP des Gruppengetriebes CT der Fig. 1 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes CT gekoppelt. Das Hohlrad PH steht mit einem Schaltpaket SP mit zwei synchronisierten, als Klauenkupplungen ausgebildeten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe G P ist synchronisiert schaltbar.

An der Vorgelegewelle W_{VG2} des Gruppengetriebes CT kann zum Antreiben eines Nebenabtriebs PTO Leistung abgezweigt werden. Soll zum Antreiben des Nebenantriebs PTO Leistung aus dem Gruppengetriebe CT abgezweigt werden, so wird zum Einschalten bzw. Zuschalten des Nebenabtriebs PTO so vorgegangen, dass zuerst über einen Motoreingriff eine Leerlaufdrehzahl des Antriebsaggregats angefordert wird, dass anschließend das Gruppengetriebe in Neutral geschaltet und die Trennkupplung K geöffnet wird, und dass darauffolgend die Trennkupplung K wieder geschlossen wird, wobei dann, wenn die Trennkupplung K wieder vollständig geschlossen ist, der Motoreingriff zurückgenommen wird.

Dann, wenn die als Klauenkupplungen ausgebildeten Schaltkupplungen eines solchen Gruppengetriebes CT geschlossen werden, können sich an den Klauenkupplungen sogenannte Zahn-auf-Zahn-Stellungen ausbilden. Zahn-auf-Zahn-Stellungen an als Klauenkupplungen ausgebildeten Schaltelementen beeinträchtigen jedoch den Schaltungskomfort und bewirken einen erhöhten Verschleiß der Schaltelemente.

Es ist daher von Bedeutung, einerseits die Wahrscheinlichkeit des Auftretens von Zahn-auf-Zahn-Stellungen zu verringern sowie andererseits dann, wenn Zahn-auf-Zahn-Stellungen dennoch auftreten, dieselben sicher, schonend und mit hohem Komfort aufzulösen.

Obwohl die Erfindung im Zusammenhang mit einem Gruppengetriebe beschrieben ist, soll deren Anwendung nicht auf Gruppengetriebe beschränkt sein, sondern bei beliebigen Getrieben, die Klauenkupplungen umfassen, verwendet werden können.

Aus der gattungsgemäßen EP 1 895 201 A2 ist ein Verfahren zum Betreiben eines Getriebes bekannt, mit Hilfe dessen Zahn-auf-Zahn-Stellungen eines Getriebes durch das Aufbringen eines stetigen oder pulsierenden Bremsmoments durch die Getriebebremse auf eine Getriebewelle beseitigt werden. Mit diesem Verfahren ist es zwar bereits möglich, Zahn-auf-Zahn-Stellungen zu beseitigen, dieses Verfahren ist jedoch nicht dazu geeignet, die Wahrscheinlichkeit des Auftretens von Zahn-auf-Zahn-Stellungen zu verringern.

Hiervon ausgehend liegt der vorliegenden Erfindung das Problem zu Grunde, ein neuartiges Verfahren zum Betreiben eines Antriebsstrangs eines Kraftfahrzeugs zu schaffen, mit Hilfe dessen die Wahrscheinlichkeit des Auftretens von Zahn-auf-Zahn-Stellungen an als Klauenkupplungen ausgebildeten Schaltelementen verringert werden kann.

Dieses Problem wird durch ein Verfahren gemäß Anspruch 1 gelöst. Erfindungsgemäß wird zur Verringerung der Wahrscheinlichkeit des Auftretens von Zahn-auf-Zahn-Stellungen an einem als Klauenkupplung ausgebildeten Schaltelement auf dasselbe über mindestens eine getriebeinterne Baugruppe und/oder über mindestens eine getriebeexterne Baugruppe ein Moment aufgebracht, sodass sich eine Differenzdrehzahl an der Klauenkupplung einem vorgegeben Sollwert annähert, wobei mit dem Schließen des Klauenkupplung erst dann begonnen wird, wenn die Differenzdrehzahl an der Klauenkupplung den vorgegebenen Sollwert erreicht hat.

Mit Hilfe des erfindungsgemäßen Verfahrens kann die Wahrscheinlichkeit des Auftretens von Zahn-auf-Zahn-Stellungen an als Klauenkupplungen ausgebildeten Schaltelementen verringert werden.

Vorzugsweise wird beim Schließen der Klauenkupplung von der oder jeder getriebeinternen Baugruppe und/oder der oder jeder getriebeexternen Baugruppe ein verringertes Moment auf die Klauenkupplung aufgebracht, welches zumindest einem Reibmoment einer sich beim Schließen der Klauenkupplung gegebenenfalls ausbildenden Zahn-auf-Zahn-Stellung entspricht, wobei das von der oder jeder getriebeinternen Baugruppe und/oder der oder jeder getriebeexternen Baugruppe auf die Klauenkupplung aufgebrachte Moment erst dann vollständig abgebaut wird, wenn die Klauenkupplung geschlossen ist.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Schema eines aus dem Stand der Technik bekannten, als Gruppengetriebe ausgebildeten Getriebes eines Kraftfahr- zeugs.

Die hier vorliegende Erfindung betrifft ein Verfahren zum Betreiben eines Antriebsstrangs eines Kraftfahrzeugs, insbesondere eines Antriebsstrangs, der neben einem Antriebsaggregat das in Fig. 1 gezeigte und bereits im Detail beschriebene, automatisierte Gruppengetriebes CT umfasst.

Die Erfindung ist aber nicht auf einen Antriebsstrang mit einem Gruppengetriebe beschränkt, sondern kann vielmehr auch bei Antriebssträngen mit anderen Getrieben, die mindestens ein als Klauenkupplung ausgebildetes Schaltelement aufweisen, zum Einsatz kommen.

Die hier vorliegende Erfindung betrifft solche Details zum Betreiben eines Antriebsstrangs eines Kraftfahrzeugs, mit Hilfe dessen die Wahrscheinlichkeit des Auftretens von Zahn-auf-Zahn-Stellungen an als Klauenkupplungen ausgebildeten Schaltelementen eines automatischen bzw. automatisierten Getriebes verringert werden kann, sowie solche Details, mit welchen dann, wenn dennoch Zahn-auf-Zahn-Stellungen auftreten, dieselben sicher, schnell, schonend und mit hohem Komfort aufgelöst werden können.

Im Sinne der hier vorliegenden Erfindung wird zur Verringerung der Wahrscheinlichkeit des Auftretens von Zahn-auf-Zahn-Stellungen an einem als Klauenkupplung ausgebildeten Schaltelement, z. B. an einem Schaltelement der Schaltpakete S1 und S2 des Hauptgetriebes HG des in Fig. 1 gezeigten Gruppengetriebes CT, so vorgegangen, dass auf ein zu schaltendes bzw. zu schließendes, als Klauenkupplung ausgebildetes Schaltelement über mindestens eine getriebeinterne Baugruppe und/oder über mindestens eine Getriebeexterne Baugruppe ein Moment aufgebracht wird, nämlich derart, dass sich eine Differenzdrehzahl an der zu schließenden Klauenkupplung einem vorgegebenen Sollwert annähert, wobei mit dem Schließen der Klauenkupplung erst dann begonnen wird, wenn die Differenzdrehzahl an der Klauenkupplung den vorgegebenen Sollwert erreicht hat. Erst dann, wenn also ein definiertes Synchronfenster an der Klauenkupplung erreicht ist, wird mit dem Schließen der Klauenkupplung begonnen.

Beim Schließen der Klauenkupplung wird von der oder jeder getriebeinternen Baugruppe und/oder der oder jeder getriebeexternen Baugruppe auf die Klauenkupplung ein verringertes Moment, welches auch als Restmoment bezeichnet werden kann, aufgebracht, welches zumindest einem Reibmoment einer sich beim Schließen der Klauenkupplung gegebenenfalls ausbildenden Zahn-auf-Zahn-Stellung entspricht. Das beim Schließen der jeweiligen Klauenkupplung aufgebrachte Restmoment ist demnach größer oder gleich dem sich gegebenenfalls in Folge einer Zahn-auf-Zahn-Stellung an der Klauenkupplung ausbildenden Reibmoment. Die Größe dieses Restmoments kann rechnerisch oder empirisch oder kennfeldabhängig ermittelt werden.

Erst dann, wenn die Klauenkupplung vollständig geschlossen ist, wird das von der oder jeder getriebeinternen Baugruppe und/oder der oder jeder getriebeexternen Baugruppe auf die Klauenkupplung aufgebrachte Moment vollständig abgebaut. Die Schließstellung der Klauenkupplung wird mit Hilfe eines Sensors messtechnisch erfasst oder gegebenenfalls aus anderen Gröβen abgeleitet.

Als getriebeinterne Baugruppe, mit Hilfe derer das jeweilige Moment auf die Klauenkupplung zur Verringerung der Wahrscheinlichkeit des Auftretens von Zahn-auf-Zahn-Stellungen beim Schließen derselben aufgebracht wird, kann z. B. die Getriebebremse Br und/oder eine Ölpumpe und/oder ein Intarder und/oder ein Betätigungszylinder der Klauenkupplung und/oder der Nebenabtrieb PTO verwendet werden. Dann, wenn eine getriebeexterne Baugruppe zum Aufbringen des jeweiligen Moments auf die Klauenkupplung verwendet wird, kann als getriebeexterne Baugruppe z. B. das Antriebsaggregat des Antriebsstrangs und/oder eine Betriebsbremse und/oder eine Motorbremse und/oder ein Pritarder und/oder die Trennkupplung K und/oder ein getriebeexterner Nebenabtrieb verwendet werden. Wie bereits ausgeführt, kann auch über mehrere dieser Baugruppen in Kombination das jeweilige Moment auf die Klauenkupplung zur Verringerung der Wahrscheinlichkeit des Auftretens von Zahn-auf-Zahn-Stellungen an derselben aufgebracht werden.

Die Verringerung der Wahrscheinlichkeit des Auftretens von Zahn-auf-Zahn-Stellungen kann dadurch unterstützt werden, dass an den Klauenkupplungen angepasste Klauenformen zum Einsatz kommen, so z. B. angespitzte Klauen oder Rundklauen.

Dann, wenn trotz der oben beschriebenen Maßnahmen, die der Verringerung der Wahrscheinlichkeit des Auftretens von Zahn-auf-Zahn-Stellungen dienen, dennoch an einer Klauenkupplung eine Zahn-auf-Zahn-Stellung auftritt, kann mit Hilfe der nachfolgenden Maßnahmen die Zahn-auf-Zahn-Stellung schnell, schonend und mit hohem Komfort aufgelöst werden, in dem über mindestens eine getriebeinterne Baugruppe und/oder über mindestens eine getriebeexterne Baugruppe das auf die jeweilige Klauenkupplung in der Zahn-auf-Zahn-Stellung wirkende Reibmoment verändert wird.

Dabei können als getriebeinterne Baugruppe wiederum die Getriebebremse Br und/oder die Ölpumpe und/oder der Intarder und/oder der Betätigungszylinder der jeweiligen Klauenkupplung und/oder der Nebenabtrieb PTO verwendet werden. Als getriebeexterne Baugruppen können wiederum das Antriebsaggregat und/oder die Betriebsbremse und/oder die Motorbremse und/oder der Pritarder und/oder die Trennkupplung K und/oder der getriebeexterne Nebenabtrieb verwendet werden.

So wird zur Auflösung einer Zahn-auf-Zahn-Stellung vorzugsweise so vorgegangen, dass über die Getriebebremse Br in Kombination mit der Trennkupplung K auf die jeweiligen Klauenkupplung ein Moment aufgebracht wird, wobei die Getriebebremse Br und die Trennkupplung K entgegengesetzte Momente auf die Klauenkupplung ausüben, die entweder gleichzeitig oder nacheinander auf die Klauenkupplung wirken, und zwar entweder dauerhaft oder gepulst.

Zusätzlich oder alternativ kann die Abtriebsdrehzahl an der Ausgangswelle W_{GA} des Gruppengetriebes CT beeinflusst werden, so z. B. über einen getriebeinternen Intarder und/oder eine getriebeexterne Betriebsbremse des Antriebsstrangs, um so Drehzahlen und/oder Momente am Abtrieb des Getriebes zu beeinflussen und hierdurch gegebenenfalls eine Zahn-auf-Zahn-Stellung aufzulösen. Besonders bevorzugt kommt die Beeinflussung der Drehzahl an der Ausgangswelle W_{GA} des Getriebes dann zum Einsatz, wenn das Getriebe CT einen abtriebsseitigen Nebenabtrieb PTO umfasst, wobei dann über den abtriebsseitigen Nebenabtrieb PTO die Abtriebsdrehzahl an der Ausgangswelle W_{GA} durch Aufbringen eines Moments beeinflusst werden kann.

Alternativ oder zusätzlich kann auch eine Zahn-auf-Zahn-Stellung über eine Beeinflussung der Antriebsdrehzahl des Getriebes an der Eingangswelle W_{GE} des Getriebes CT aufgelöst werden, wobei dies unter Verwendung des Antriebsaggregats und/oder einer Motorbremse und/oder eines Pritarders und/oder der Trennkupplung K erfolgen kann.

Wie mehrfach ausgeführt, kann auch über eine Ölpumpe, die von einer Getriebewelle des Getriebes CT angetrieben wird, ein Moment auf die Klauenkupplung aufgebracht werden, um eine Zahn-auf-Zahn-Stellung aufzulösen. Dies kann dadurch erfolgen, dass z. B. die Drehzahl der Ölpumpe angepasst wird. Wie ebenfalls bereits ausgeführt, kann auch über einen getriebeinternen Nebenabtrieb PTO oder einen getriebeexternen Nebenabtrieb auf die Klauenkupplung ein Moment aufgebracht werden, um eine Zahn-auf-Zahn-Stellung aufzulösen.

Sämtliche oben genannten Maßnahmen können alleine oder in Kombination miteinander verwendet werden, um Zahn-auf-Zahn-Stellungen an Klauenkupplungen eines Getriebes sicher, schonend und schnell aufzulösen.

Alternativ oder zusätzlich ist es auch möglich, eine Zahn-auf-Zahn-Stellung an einem als Klauenkupplung ausgebildeten Schaltelement dadurch aufzulösen, dass ein der Ansteuerung der Klauenkupplung dienender Betätigungszylinder mit einer veränderten Schließkraft betrieben wird. Durch Verringerung der Schließkraft des Betätigungszylinders einer Klauenkupplung kann eine Zahn-auf-Zahn-Stellung an derselben sicher und schnell aufgelöst werden, wobei nach dem Auflösen der Zahn-auf-Zahn-Stellung die Schließkraft vorzugsweise wieder erhöht wird.

Zusätzlich oder alternativ kann der Betätigungszylinder der betroffenen Klauenkupplung mit einem Gegenpuls zur Auflösung der Zahn-auf-Zahn-Stellung angesteuert werden. So kann z. B. dann, wenn als Betätigungszylinder ein Zwei- oder Dreistellungszylinder verwendet wird, eine Zahn-auf-Zahn-Stellung dadurch aufgelöst werden, dass eine Gegenseite des jeweiligen Zylinders kurzzeitig mit einem Druckmittel zur Erzeugung eines Gegenpulses befüllt wird, wobei dieser Gegenpuls dem eigentlichen Schließen der Klauenkupplung entgegenwirkt. Hierdurch kann die Schließkraft des Betätigungszylinders verringert werden bzw. dieselbe wird vollständig aufgelöst, um so sicher und schnell sowie schonend die Zahn-auf-Zahn-Stellung aufzulösen. Gegebenenfalls kann der Gegenpuls derart bemessen werden, dass die Klauen der jeweiligen Klauenkupplung kurzzeitig voneinander abgehoben werden.

Dann, wenn das erfindungsgemäße Verfahren an einem Gruppengetriebe, z. B. bei dem in Fig. 1 gezeigten Gruppengetriebe CT, zum Einsatz kommt, kann dann, wenn z. B. an einer Klauenkupplung des Schaltpakets SV der Splitgruppe GV eine Zahn-auf-Zahn-Stellung auftritt, dieselbe dadurch aufgelöst werden, dass an einer anderen Gruppe des Gruppengetriebes CT, z. B. am Hauptgetriebe HG, trotz der Zahn-auf-Zahn-Stellung im Bereich der Splitgruppe GV eine andere Schaltung eines anderen als Klauenkupplung ausgebildeten Schaltelements, z. B. im Bereich des Schaltpakets S1, ausgeführt wird.

Es wird dann trotz des Vorliegens einer Zahn-auf-Zahn-Stellung an einer Klauenkupplung einer Gruppe eine Schaltung an einer anderen Gruppe des Gruppengetriebes durchgeführt, wodurch sich Drehzahlen und -momente an der Klauenkupplung, an der die Zahn-auf-Zahn-Stellung vorliegt, ändern, wodurch letztendlich die Zahn-auf-Zahn-Stellung an der jeweiligen Klauenkupplung aufgelöst werden kann.

Weiterhin kann bei Gruppengetrieben eine Zahn-auf-Zahn-Stellung an einer Klauenkupplung einer Gruppe dadurch ausgelöst werden, dass innerhalb derselben Gruppe an einer weiteren Klauenkupplung eine Schaltung erfolgt.

### Bezugszeichen

- Br: Getriebebremse
- CT: Gruppengetriebe
- G1: Übersetzungsstufe Vorwärtsfahrt
- G2: Übersetzungsstufe Vorwärtsfahrt
- G3: Übersetzungsstufe Vorwärtsfahrt
- GV: Splitgruppe
- GP: Bereichsgruppe
- HG: Hauptgetriebe
- K: Trennkupplung
- K1: Übersetzungsstufe
- K2: Übersetzungsstufe
- L: Langsamfahrstufe
- PS: Sonnenrad
- PT: Planetenträger
- PTO: Nebenabtrieb
- PH: Hohlrad
- R: Übersetzungsstufe Rückwärtsfahrt
- S: Schnellfahrstufe
- S1: Schaltpaket
- S2: Schaltpaket
- SP: Schaltpaket
- SV: Schaltpaket
- W_{GA}: Ausgangswelle
- W_{GE}: Eingangswelle
- W_{H}: Hauptwelle
- W_{VG1}: Vorgelegewelle
- W_{VG2}: Vorgelegewelle

## Patentansprüche

1. Verfahren zum Betreiben eines Antriebsstrangs eines Kraftfahrzeugs, wobei der Antriebsstrang ein zwischen einem Antriebsaggregat sowie einem Achsantrieb angeordnetes Getriebe aufweist, wobei eine Eingangswelle des Getriebes über eine steuerbare Trennkupplung mit dem Antriebsaggregat und eine Ausgangswelle des Getriebes mit dem Achsantrieb in Verbindung steht, und wobei das Getriebe mindestens ein als Klauenkupplung ausgebildetes Schaltelement umfasst, **dadurch gekennzeichnet, dass** zur Verringerung der Wahrscheinlichkeit des Auftretens von Zahn-auf-Zahn-Stellungen an einem als Klauenkupplung ausgebildeten Schaltelement auf dasselbe über mindestens eine getriebeinterne Baugruppe und/oder über mindestens eine getriebeexterne Baugruppe ein Moment aufgebracht wird, sodass sich eine Differenzdrehzahl an der Klauenkupplung einem vorgegeben Sollwert annähert, wobei mit dem Schließen der Klauenkupplung erst dann begonnen wird, wenn die Differenzdrehzahl an der Klauenkupplung den vorgegebenen Sollwert erreicht hat.

2. Verfahren nach Anspruch 1, **dadurch gekennzeichnet, dass** beim Schließen der Klauenkupplung von der oder jeder getriebeinternen Baugruppe und/oder der oder jeder getriebeexternen Baugruppe ein verringertes Moment auf die Klauenkupplung aufgebracht wird, welches zumindest einem Reibmoment einer sich beim Schließen der Klauenkupplung gegebenenfalls ausbildenden Zahn-auf-Zahn-Stellung entspricht.

3. Verfahren nach Anspruch 2, **dadurch gekennzeichnet, dass** das von der oder jeder getriebeinternen Baugruppe und/oder der oder jeder getriebeexternen Baugruppe auf die Klauenkupplung aufgebrachte Moment erst dann vollständig abgebaut wird, wenn die Klauenkupplung geschlossen ist.

4. Verfahren nach Anspruch 3, **dadurch gekennzeichnet, dass** mit Hilfe eines Sensors überwacht wird, ob die Klauenkupplung geschlossen ist.

5. Verfahren nach einem der Ansprüche 1 bis 4, **dadurch gekennzeichnet, dass** als getriebeinterne Baugruppe eine Getriebebremse und/oder eine Ölpumpe und/oder ein Intarder und/oder ein Betätigungszylinder und/oder ein Nebenabtrieb verwendet wird, um das jeweilige Moment auf die Klauenkupplung aufzubringen.

6. Verfahren nach einem der Ansprüche 1 bis 5, **dadurch gekennzeichnet, dass** als getriebeexterne Baugruppe das Antriebsaggregat und/oder eine Betriebsbremse und/oder eine Motorbremse und/oder ein Pritarder und/oder die Trennkupplung und/oder ein Nebenabtrieb verwendet wird, um das jeweilige Moment auf die Klauenkupplung aufzubringen.

7. Verfahren nach einem der Ansprüche 1 bis 6, **dadurch gekennzeichnet, dass** dann, wenn sich beim Schließen der Klauenkupplung dennoch eine Zahn-auf-Zahn-Stellung ausbildet, über mindestens eine getriebeinterne Baugruppe und/oder über mindestens eine getriebeexterne Baugruppe das auf die Klauenkupplung in der Zahn-auf-Zahn-Stellung wirkende Reibmoment verändert wird, um die Zahn-auf-Zahn-Stellung aufzulösen.

8. Verfahren nach Anspruch 7, **dadurch gekennzeichnet, dass** hierzu als getriebeinterne Baugruppe eine Getriebebremse und/oder eine Ölpumpe und/oder ein Intarder und/oder ein Betätigungszylinder und/oder ein Nebenabtrieb verwendet wird.

9. Verfahren nach Anspruch 7 oder 8, **dadurch gekennzeichnet, dass** als getriebeexterne Baugruppe das Antriebsaggregat und/oder eine Betriebsbremse und/oder eine Motorbremse und/oder ein Pritarder und/oder die Trennkupplung und/oder ein Nebenabtrieb verwendet wird.

10. Verfahren nach einem der Ansprüche 1 bis 9, **dadurch gekennzeichnet, dass** der Antriebsstrang als Getriebe ein Gruppengetriebe aufweist, welches mindestens ein mehrstufiges Hauptgetriebe, eine dem Hauptgetriebe vor- oder nachgeschaltete Splitgruppe und/oder eine dem Hauptgetriebe vor- oder nachgeschaltete Bereichsgruppe umfasst, wobei das Hauptgetriebe und/oder die Splitgruppe und/oder die Bereichsgruppe mindestens ein als Klauenkupplung ausgebildeten Schaltelement aufweist.

11. Verfahren nach Anspruch 10, **dadurch gekennzeichnet, dass** eine Zahn-auf-Zahn-Stellung an einer Klauenkupplung einer Gruppe des Gruppengetriebes **dadurch** aufgelöst wird, dass an einer Klauenkupplung einer anderen Gruppe des Gruppengetriebes eine Schaltung ausgeführt wird.

12. Verfahren nach Anspruch 10 oder 11, **dadurch gekennzeichnet, dass** eine Zahn-auf-Zahn-Stellung an einer Klauenkupplung einer Gruppe des Gruppengetriebes **dadurch** aufgelöst wird, dass an einer anderen Klauenkupplung derselben Gruppe des Gruppengetriebes eine Schaltung ausgeführt wird.

## Claims

1. Method for operating a drivetrain of a motor vehicle, wherein the drivetrain has a transmission arranged between a drive unit and an axle drive, wherein an input shaft of the transmission is connected via a controllable separating clutch to the drive unit and an output shaft of the transmission is connected to the axle drive, and wherein the transmission comprises at least one shift element designed as a jaw clutch, **characterized in that**, to reduce the probability of the occurrence of tooth-to-tooth positions in a shift element designed as a jaw clutch, a torque is imparted to said shift element by means of at least one transmission-internal assembly and/or by means of at least one transmission-external assembly, such that a differential rotational speed at the jaw clutch approaches a predefined setpoint value, wherein the closing of the jaw clutch is first commenced when the differential rotational speed at the jaw clutch has reached the predefined setpoint value.

2. Method according to Claim 1, **characterized in that**, during the closing of the jaw clutch, a reduced torque is imparted to the jaw clutch by the or each transmission-internal assembly and/or by the or each transmission-external assembly, which reduced torque corresponds at least to a frictional torque of a tooth-to-tooth position possibly arising during the closing of the jaw clutch.

3. Method according to Claim 2, **characterized in that** the torque imparted by the or each transmission-internal assembly and/or by the or each transmission-external assembly to the jaw clutch is completely eliminated only when the jaw clutch is closed.

4. Method according to Claim 3, **characterized in that** it is monitored by means of a sensor as to whether the jaw clutch is closed.

5. Method according to one of Claims 1 to 4, **characterized in that**, as a transmission-internal assembly, a transmission brake and/or an oil pump and/or an Intarder and/or an actuating cylinder and/or a power take-off is used to impart the respective torque to the jaw clutch.

6. Method according to one of Claims 1 to 5, **characterized in that**, as a transmission-external assembly, the drive unit and/or a service brake and/or an engine brake and/or a PriTarder and/or the separating clutch and/or a power take-off is used to impart the respective torque to the jaw clutch.

7. Method according to one of Claims 1 to 6, **characterized in that**, if a tooth-to-tooth position nevertheless arises during the closing of the jaw clutch, the frictional torque acting on the jaw clutch in the tooth-to-tooth position is varied, in order to eliminate the tooth-to-tooth position, by means of at least one transmission-internal assembly and/or by means of at least one transmission-external assembly.

8. Method according to Claim 7, **characterized in that**, for this purpose, as a transmission-internal assembly, a transmission brake and/or an oil pump and/or an Intarder and/or an actuating cylinder and/or a power take-off is used.

9. Method according to Claim 7 or 8, **characterized in that**, as a transmission-external assembly, the drive unit and/or a service brake and/or an engine brake and/or a PriTarder and/or the separating clutch and/or a power take-off is used.

10. Method according to one of Claims 1 to 9, **characterized in that** the drivetrain has, as a transmission, an auxiliary-range transmission which comprises at least one multi-stage main transmission, a splitter unit front-mounted or rear-mounted on the main transmission, and/or a range unit front-mounted or rear-mounted on the main transmission, wherein the main transmission and/or the splitter unit and/or the range unit has at least one shift element designed as a jaw clutch.

11. Method according to Claim 10, **characterized in that** a tooth-to-tooth position in a jaw clutch of one group of the auxiliary-range transmission is eliminated by virtue of a shift being carried out in a jaw clutch of another group of the auxiliary-range transmission.

12. Method according to Claim 10 or 11, **characterized in that** a tooth-to-tooth position in one jaw clutch of a group of the auxiliary-range transmission is eliminated by virtue of a shift being carried out in another jaw clutch of the same group of the auxiliary-range transmission.

## Revendications

1. Procédé pour faire fonctionner une chaîne cinématique d'un véhicule automobile, dans lequel la chaîne cinématique présente une transmission disposée entre un groupe motopropulseur et une commande d'essieu, un arbre d'entrée de la transmission étant en liaison avec le groupe motopropulseur par le biais d'un embrayage séparateur commandable et un arbre de sortie de la transmission étant en liaison avec la commande d'essieu, et la transmission comprenant au moins un élément de commutation réalisé sous forme d'embrayage à griffes, **caractérisé en ce que** pour réduire la probabilité d'apparition de positions de superposition de dents sur un élément de commutation réalisé sous forme d'embrayage à griffes, on applique à celui-ci un couple par le biais d'au moins un module interne à la transmission, et/ou par le biais d'au moins un module externe à la transmission, de sorte qu'un régime différentiel au niveau de l'embrayage à griffes s'approche d'une valeur de consigne prédéfinie, la fermeture de l'embrayage à griffes ne commençant que lorsque le régime différentiel au niveau de l'embrayage à griffes a atteint la valeur de consigne prédéfinie.

2. Procédé selon la revendication 1, **caractérisé en ce que** lors de la fermeture de l'embrayage à griffes un couple réduit est appliqué à l'embrayage à griffes par le ou par chaque module interne à la transmission et/ou par le ou chaque module externe à la transmission, lequel correspond au moins à un couple de friction d'une position de superposition des dents éventuellement présente lors de la fermeture de l'embrayage à griffes.

3. Procédé selon la revendication 2, **caractérisé en ce que** le couple appliqué sur l'embrayage à griffes par le ou chaque module interne à la transmission et/ou par le ou chaque module externe à la transmission est seulement complètement réduit lorsque l'embrayage à griffes est fermé.

4. Procédé selon la revendication 3, **caractérisé en ce que** l'on surveille à l'aide d'un capteur si l'embrayage à griffes est fermé.

5. Procédé selon l'une quelconque des revendications 1 à 4, **caractérisé en ce que** l'on utilise comme module interne à la transmission un frein de transmission et/ou une pompe à huile et/ou un ralentisseur intégré Intarder et/ou un cylindre de commande et/ou une prise de force auxiliaire, afin d'appliquer le couple respectif à l'embrayage à griffes.

6. Procédé selon l'une quelconque des revendications 1 à 5, **caractérisé en ce que** l'on utilise comme module externe à la transmission le groupe motopropulseur et/ou un frein de service et/ou un frein moteur et/ou un ralentisseur Pritarder et/ou l'embrayage séparateur et/ou une prise de force auxiliaire, afin d'appliquer le couple respectif à l'embrayage à griffes.

7. Procédé selon l'une quelconque des revendications 1 à 6, **caractérisé en ce que** s'il se présente encore une position de superposition de dents lors de la fermeture de l'embrayage à griffes, le couple de friction agissant sur l'embrayage à griffes dans la position de superposition des dents est modifié par le biais d'au moins un module interne à la transmission et/ou par le biais d'au moins un module externe à la transmission, afin de sortir de la position de superposition des dents.

8. Procédé selon la revendication 7, **caractérisé en ce que** l'on utilise à cet effet en tant que module interne à la transmission un frein de transmission et/ou une pompe à huile et/ou un ralentisseur Intarder et/ou un cylindre de commande et/ou une prise de force auxiliaire.

9. Procédé selon la revendication 7 ou 8, **caractérisé en ce que** l'on utilise en tant que module externe à la transmission le groupe motopropulseur et/ou un frein de service et/ou un frein moteur et/ou un ralentisseur Pritarder et/ou l'embrayage séparateur et/ou une prise de force auxiliaire.

10. Procédé selon l'une quelconque des revendications 1 à 9, **caractérisé en ce que** la chaîne cinématique présente en tant que transmission, une transmission à groupe-relais, qui comprend au moins une transmission principale à plusieurs étages, un doubleur de gamme monté en amont ou en aval de la transmission principale et/ou un groupe-relais monté en amont ou en aval de la transmission principale, la transmission principale et/ou le doubleur de gamme et/ou le groupe-relais présentant au moins un élément de commutation réalisé sous forme d'embrayage à griffes.

11. Procédé selon la revendication 10, **caractérisé en ce qu'**une position de superposition des dents sur un embrayage à griffes d'un groupe de la transmission à groupe-relais est supprimée en réalisant une commutation au niveau d'un embrayage à griffes d'un autre groupe de la transmission à groupe-relais.

12. Procédé selon la revendication 10 ou 11, **caractérisé en ce qu'**une position de superposition des dents sur un embrayage à griffes d'un groupe de la transmission à groupe-relais est supprimée en réalisant une commutation au niveau d'un autre embrayage à griffes du même groupe de la transmission à groupe-relais.
